# EUROPÄISCHE PATENTANMELDUNG

(11) **EP 1 724 705 A1**
(43) Veröffentlichungstag der Anmeldung: **22.11.2006**
(21) Anmeldenummer: 05103995.6
(22) Anmeldetag: 12.05.2005
(51) Int. Cl.: G06K 19/07, G06K 7/00

(54) **Adaptiver RFID-Tag**

(71) Anmelder: Swisscom AG, 3000 Bern 29 (CH)
(72) Erfinder: Semling, Michael, 5413 Birmenstorf (CH)
(74) Vertreter: BOVARD AG

(57) **Zusammenfassung**

Die Erfindung betrifft einen RFID-Tag (1) mit Mittel zur Erfassung eines RFID-Abfragesignals (8), mit Mittel zur Abstrahlung eines RFID-Antwortsignals (7) und mit einem Energiespeicher (5), wobei der Energiespeicher (5) mittels einer Ladeschaltung (2) durch die erfassbare elektromagnetischer Energie eines RFID-Abfragesignals (8) aufgeladen wird, und wobei mittels einer Steuerschaltung (4) die Abstrahlung eines RFID-Antwortsignals (7) entsprechend bestimmbarer Auslösekriterien ausgelöst wird.

## Beschreibung

### Technisches Gebiet

Die vorliegende Erfindung betrifft einen adaptiven RFID-Tag mit Mittel zur Erfassung eines RFID-Abfragesignals und mit Mittel zur Abstrahlung eines RFID-Antwortsignals.

### Stand der Technik

Bei der RFID (Radio Frequency Identification) Technologie wird mittels einer RFID-Lesevorrichtung auf Identifikationsdaten eines so genannten RFID-Tags zugegriffen. Dabei strahlt die RFID-Lesevorrichtung ein durch den RFID-Tag erfassbares RFID-Abfragesignal aus, worauf der RFID-Tag anschliessend ein durch die RFID-Lesevorrichtung erfassbares RFID-Antwortsignal mit eingebetteten Identifikationsdaten ausstrahlt. Das RFID-Abfragesignal und das RFID-Antwortsignal werden mittels geeigneter elektromagnetischer Wellen übertragen, wobei die Identifikationsdaten beispielsweise mittels einer geeigneten Modulation im RFID-Antwortsignal enthalten sind. Die RFID Technologie ermöglicht also den Zugriff auf Identifikationsdaten über eine kontaktlose Schnittstelle. Je nach Ausgestaltung des RFID-Tags bzw. der RFID-Lesevorrichtung sind Daten auch in umgekehrter Richtung von der RFID-Lesevorrichtung auf den RFID-Tag übertragbar und im RFID-Tag speicherbar. In Abhängigkeit der Dimensionierung verschiedener Parameter wie beispielsweise der Energie des RFID-Abfragesignals oder des RFID-Antwortsignals kann die Distanz zwischen der RFID-Lesevorrichtung und dem RFID-Tag beispielsweise nur wenige Zentimeter oder auch bis zu 30 Meter betragen. Für kleinere Distanzen werden insbesondere billig und kompakt herstellbare RFID-Tags ohne integrierten Energiespeicher verwendet. Bei einem RFID-Tag ohne integrierten Energiespeicher erfolgt die Abstrahlung des RFID-Antwortsignals beispielsweise mittels eines elektromagnetischen Schwingkreises des RFID-Tags, wobei elektromagnetische Energie des von der RFID-Lesevorrichtung ausgesendeten RFID-Abfragesignals für die Anregung des elektromagnetischen Schwingkreises genutzt wird. Für grössere Distanzen werden insbesondere RFID-Tags mit einem integrierten Energiespeicher wie beispielsweise einer Batterie verwendet. RFID-Tags mit integriertem Energiespeicher sind typischerweise voluminöser und teurer in der Herstellung. Zudem haben RFID-Tags mit integriertem Energiespeicher wegen der Entladung des Energiespeichers normalerweise eine beschränkte Lebensdauer von einigen Jahren. Der Zugriff auf Identifikationsdaten über grössere Distanzen kann beispielsweise bei der Identifikation von Gütern in einem Bahnwagen von Vorteil sein. Da ein RFID-Antwortsignal potentiell von verschiedenen RFID-Lesevorrichtungen erfassbar ist, kann es je nach Anwendung erforderlich sein, dass das RFID-Antwortsignal nur in einem beschränkten Umkreis des RFID-Tags detektierbar ist. Eine solche Anwendung ist beispielsweise ein RFID basiertes Kassensystem. Im Stand der Technik werden für kleinere bzw. grössere Distanzen zwischen der RFID-Lesevorrichtung und dem RFID-Tag typischerweise RFID-Tags ohne bzw. mit integriertem Energiespeicher verwendet. Im Stand der Technik sind jedoch keine RFID-Tags bekannt, welche dynamisch an unterschiedliche Erfordernisse, wie beispielsweise an eine bestimmbare Distanz zwischen der RFID-Lesevorrichtung und dem RFID-Tag, adaptierbar sind.

### Offenbarung der Erfindung

Es ist eine Aufgabe der vorliegenden Erfindung, einen neuen RFID-Tag vorzuschlagen, welcher die Nachteile des Standes der Technik nicht hat. Es ist insbesondere eine Aufgabe der Erfindung, einen dynamisch adaptierbaren RFID-Tag vorzuschlagen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass ein RFID-Tag, welcher Mittel zur Erfassung eines RFID-Abfragesignals, Mittel zur Abstrahlung eines RFID-Antwortsignals und einen Energiespeicher umfasst, eine Ladeschaltung zur Ladung des Energiespeichers mittels erfasster elektromagnetischer Energie eines RFID-Abfragesignals und eine Steuerschaltung zur Auslösung der Abstrahlung eines RFID-Antwortsignals entsprechend bestimmbarer Auslösekriterien umfasst. Ein solcher RFID-Tag hat insbesondere den Vorteil, dass beispielsweise die Energie des RFID-Antwortsignals des RFID-Tags dynamisch adaptierbar ist. So kann beispielsweise mittels der Steuerschaltung erreicht werden, dass der RFID-Tag das RFID-Antwortsignals nur mit einer relativ kleinen Energie abgestrahlt wird und somit das RFID-Antwortsignal nur in einem beschränkten Umkreis des RFID-Tags erfassbar ist.

In einer Ausführungsvariante umfasst die Steuerschaltung des RFID-Tags Mittel zur Detektion des Ladezustands des Energiespeichers und Mittel zur Auslösung der Abstrahlung eines RFID-Antwortsignals bei Erreichen eines bestimmbaren Ladezustands. Ein solcher RFID-Tag hat insbesondere den Vorteil, dass das RFID-Antwortsignal beispielsweise mit einer bestimmbaren minimalen Energie zur Übertragung des RFID-Antwortsignals über eine bestimmbare Distanz zwischen dem RFID-Tag und der RFID-Lesevorrichtung abstrahlbar ist.

In einer anderen Ausführungsvariante umfasst die Steuerschaltung des RFID-Tags Mittel zur Detektion eines RFID-Abfragesignals und Mittel zur Auslösung der Abstrahlung eines RFID-Antwortsignals nach dem Ablauf eines bestimmbaren Zeitintervalls nach der Detektion des RFID-Abfragesignals. Ein solcher RFID-Tag hat insbesondere den Vorteil, dass das RFID-Abfragesignal der RFID-Lesevorrichtung zu bestimmbaren Zeitpunkten abschaltbar ist und anschliessend die RFID-Lesevorrichtung für den Empfang des RFID-Abfragesignals umschaltbar ist. Mit einer solchen RFID-Lesevorrichtung ist insbesondere eine höhere Sensitivität für den Empfang des RFID-Antwortsignals erzielbar.

In einer anderen Ausführungsvariante umfasst die Steuerschaltung Mittel zur Detektion eines ersten und eines zweiten RFID-Abfragesignals und Mittel zur Aktivierung der Ladeschaltung, wobei mittels der Steuerschaltung bei der Detektion des ersten RFID-Abfragesignals die Ladeschaltung aktiviert wird, und wobei mittels der Steuerschaltung bei der Detektion des zweiten RFID-Abfragesignals die Abstrahlung eines RFID-Antwortsignals ausgelöst wird. Ein solcher RFID-Tag hat insbesondere den Vorteil, dass die Aktivierung der Ladeschaltung sowie die Auslösung des RFID-Antwortsignals mittels entsprechender RFID-Abfragesignalen durch die RFID-Lesevorrichtung steuerbar ist, womit beispielsweise die Energie des RFID-Antwortsignals durch die RFID-Lesevorrichtung definierbar ist.

In einer weiteren Ausführungsvariante umfasst die Steuerschaltung Mittel zur Detektion des Einschaltens und des Ausschaltens eines RFID-Abfragesignals und Mittel zur Auslösung der Abstrahlung eines RFID-Antwortsignals nach einem Einschalten und einem anschliessenden Ausschalten des RFID-Abfragesignals. Ein solcher RFID-Tag hat insbesondere Vorteile der obigen Ausführungsvarianten.

In einer weiteren Ausführungsvariante umfasst die Steuerschaltung Mittel zur Schätzung der Signalenergie des RFID-Abfragesignals und Mittel zur Auslösung eines RFID-Antwortsignals mit einer der geschätzten Signalenergie des RFID-Abfragesignals zugeordneten Energie. Ein solcher RFID-Tag hat insbesondere den Vorteil, dass die Energie des RFID-Antwortsignals an die Energie des RFID-Abfragesignals adaptierbar ist. Ein RFID-Abfragesignal mit einer kleineren Energie kann beispielsweise von einer grösseren Distanz zwischen dem RFID-Tag und der RFID-Lesevorrichtung herrühren. Mit einer entsprechenden höheren Energie des RFID-Antwortsignals kann beispielsweise erreicht werden, dass das RFID-Antwortsignal über genügend Energie verfügt, um von der RFID-Lesevorrichtung empfangen zu werden.

In einer Ausführungsvariante umfasst der Energiespeicher einen Kondensator. Eine solche Ausführungsvariante hat insbesondere den Vorteil, dass ein Energiespeicher mit bekannten technischen Merkmalen und Eigenschaften verwendbar ist.

### Kurze Beschreibung der Zeichnung

Nachfolgend werden Ausführungsvarianten der vorliegenden Erfindung anhand von Beispielen beschrieben. Die Beispiele der Ausführungen werden durch folgende beigelegte Figur illustriert:

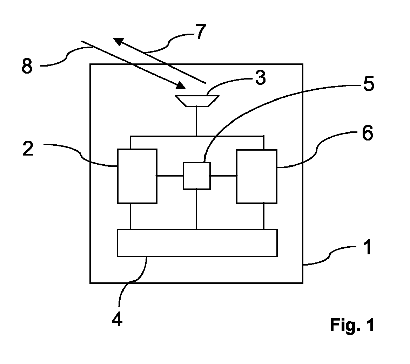

Figur 1 zeigt ein Blockdiagramm eines dynamisch adaptierbaren RFID-Tags.

### Ausführungsformen der Erfindung

In Figur 1 bezieht sich das Bezugszeichen 1 auf einen dynamisch adaptierbaren RFID-Tag. Der RFID-Tag 1 umfasst Mittel zur Erfassung eines RFID-Abfragesignals und Mittel zur Abstrahlung eines RFID-Antwortsignals. Die Mittel zur Erfassung eines RFID-Abfragesignals werden im Wesentlichen durch eine Antenne 3 gebildet. Die Mittel zur Abstrahlung eines RFID-Antwortsignals werden im Wesentlichen durch die Antenne 3 sowie durch ein entsprechendes Auslösemodul 6, welches beispielsweise einen Signalgenerator zur Erzeugung und Abstrahlung eines RFID-Antwortsignals über die Antenne 3 umfasst, gebildet. Es sei hier erwähnt, dass das RFID-Abfragesignal 8 und das RFID-Antwortsignal 7 mittels einer einzelnen Antenne 3 oder auch mittels mehr als einer Antenne, beispielsweise mit einer Antenne, welche für den Empfang des RFID-Abfragesignals optimiert ist, und mit einer Antenne, welche für die Abstrahlung eines RFID-Antwortsignals optimiert ist, empfangbar oder abstrahlbar ist. Der RFID-Tag umfasst weiter eine Ladeschaltung 2. Die Ladeschaltung 2 wird durch das RFID-Abfragesignal aktiviert sowie mit Energie des RFID-Abfragesignals versorgt und umfasst beispielsweise eine Gleichrichterschaltung. Mit der Ladeschaltung 2 wird ein Energiespeicher 5, wie beispielsweise ein Kondensator, des RFID-Tags 1 aufgeladen. Sobald über dem Energiespeicher 5 eine bestimmbare Spannung aufgebaut ist, wird beispielsweise mittels eines elektronischen Schalters eine Steuerschaltung 4 mit Strom versorgt und damit aktiviert. Die Steuerschaltung 4 überprüft nun verschiedene Parameter des RFID-Tags, beispielsweise den Ladezustand des Energiespeichers 5, das RFID-Abfragesignal 8 oder irgendeinen anderen Parameter des RFID-Tags 1, und vergleicht Parameter des RFID-Tags 1 mit bestimmbaren Auslösekriterien für die Auslösung der Abstrahlung eines RFID-Antwortsignals. Die Auslösekriterien sind beispielsweise in einem Speicher der Steuerschaltung 2 abgespeichert und umfassen beispielsweise einen Schwellwert, der über dem Energiespeicher messbaren Spannung, eine Grundfrequenz des RFID-Abfragesignals oder irgendein anderes bestimmbares Auslösekriterium. Sobald ein und/oder mehrere Parameter des RFID-Tags mit den abgespeicherten Auslösekriterien übereinstimmen, wird mittels des Auslösemoduls 6 die Abstrahlung eines RFID-Antwortsignals ausgelöst.

In einer Ausführungsvariante überprüft die Steuerschaltung den Ladezustand des Energiespeichers 5. Mittels der Steuerschaltung wird das RFID-Antwortsignal 7 ausgelöst, sobald beispielsweise über dem Energiespeicher 5 eine bestimmbare Spannung überschritten wird. Diese Ausführungsvariante lässt sich insbesondere durch wenige elektronische Bauteile realisieren, wie beispielsweise einen Schwingkreis bestehend aus einer Spule und einem Kondensator für die Erfassung der elektromagnetischen Energie des RFID-Abfragesignals, einer Gleichrichterschaltung bestehend aus Dioden für die Gleichrichtung der über dem Schwingkreis vorhandenen Wechselspannungssignals, einem Kondensator für die Speicherung des gleichgerichteten Spannungssignals und einem elektronischen Schalter wie beispielsweise einem Transistor zur Verbindung des Kondensators mit dem Auslösemodul 6, sobald über dem Kondensator eine bestimmbare Spannung detektierbar ist.

## Patentansprüche

1. RFID-Tag (1) mit Mittel zur Erfassung eines RFID-Abfragesignals (8), mit Mittel zur Abstrahlung eines RFID-Antwortsignals (7) und mit einem Energiespeicher (5), **gekennzeichnet durch**:
eine Ladeschaltung (2) zur Ladung des Energiespeichers (5) mittels erfasster elektromagnetischer Energie eines RFID-Abfragesignals (8), und
eine Steuerschaltung (4) zur Auslösung der Abstrahlung eines RFID-Antwortsignals (7) entsprechend bestimmbarer Auslösekriterien.

2. RFID-Tag nach Anspruch 1, **dadurch gekennzeichnet, dass** die Steuerschaltung (4) Mittel zur Detektion des Ladezustands des Energiespeichers (5) und Mittel zur Auslösung der Abstrahlung eines RFID-Antwortsignals (7) bei Erreichen eines bestimmbaren Ladezustands umfasst.

3. RFID-Tag nach Anspruch 1, **dadurch gekennzeichnet, dass** die Steuerschaltung (4) Mittel zur Detektion eines RFID-Abfragesignals (8) und Mittel zur Auslösung der Abstrahlung eines RFID-Antwortsignals (7) nach dem Ablauf eines bestimmbaren Zeitintervalls nach der Detektion des RFID-Abfragesignals (8) umfasst.

4. RFID-Tag nach Anspruch 1, **dadurch gekennzeichnet, dass** die Steuerschaltung (4) Mittel zur Detektion eines ersten und eines zweiten RFID-Abfragesignals (8) und Mittel zur Aktivierung der Ladeschaltung (2) umfasst, wobei mittels der Steuerschaltung (4) bei der Detektion des ersten RFID-Abfragesignals (8) die Ladeschaltung aktiviert wird, und wobei mittels der Steuerschaltung (4) bei der Detektion des zweiten RFID-Abfragesignals (8) die Abstrahlung eines RFID-Antwortsignals (7) ausgelöst wird.

5. RFID-Tag nach Anspruch 1, **dadurch gekennzeichnet, dass** die Steuerschaltung (4) Mittel zur Detektion des Einschaltens und des Ausschaltens eines RFID-Abfragesignals (8) und Mittel zur Auslösung der Abstrahlung eines RFID-Antwortsignals (7) nach einem Einschalten und einem anschliessenden Ausschalten des RFID-Abfragesignals (8) umfasst.

6. RFID-Tag nach Anspruch 1, **dadurch gekennzeichnet, dass** die Steuerschaltung (4) Mittel zur Schätzung der Signalenergie des RFID-Abfragesignals (8) und Mittel zur Auslösung eines RFID-Antwortsignals (7) mit einer der geschätzten Signalenergie des RFID-Abfragesignals (8) zugeordneten Energie umfasst.

7. RFID-Tag nach Anspruch 1, **dadurch gekennzeichnet, dass** der Energiespeicher (5) einen Kondensator umfasst.

8. Verfahren zur Auslösung eines RFID-Antwortsignals eines RFID-Tags, wobei der RFID-Tag Mittel zur Erfassung eines RFID-Abfragesignals (8), Mittel zur Auslösung eines RFID-Antwortsignals (7) sowie einen Energiespeicher (5) umfasst, **dadurch gekennzeichnet,**
**dass** mittels einer Ladeschaltung (2) der Energiespeicher (5) mittels erfassbarer elektromagnetischer Energie eines RFID-Abfragesignals (8) aufgeladen wird, und
**dass** mittels einer Steuerschaltung (4) die Auslösung der Abstrahlung eines RFID-Antwortsignals (7) entsprechend bestimmbarer Auslösekriterien ausgelöst wird.
